(19) Europäisches Patentamt
European Patent Office
Office européen des brevets

(11) **EP 4 683 167 A1**

(12) **EUROPEAN PATENT APPLICATION**
published in accordance with Art. 153(4) EPC

(43) Date of publication:
**21.01.2026 Bulletin 2026/04**

(21) Application number: **24770592.4**

(22) Date of filing: **04.03.2024**

(51) International Patent Classification (IPC):
*H02J 7/10* (2006.01)

(52) Cooperative Patent Classification (CPC):
**H02J 7/06**

(86) International application number:
**PCT/JP2024/007945**

(87) International publication number:
**WO 2024/190481 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.03.2023 JP 2023042357**

(71) Applicant: **Panasonic Corporation
Osaka 571-8501 (JP)**

(72) Inventors:
• **KITAMURA, Kota**
**Kadoma-shi, Osaka 571-0057 (JP)**
• **TSUJIMOTO, Naoki**
**Kadoma-shi, Osaka 571-0057 (JP)**
• **NISHII, Kazuhiko**
**Kadoma-shi, Osaka 571-0057 (JP)**
• **MIWA, Tatsuya**
**Kadoma-shi, Osaka 571-0057 (JP)**

(74) Representative: **Müller-Boré & Partner
Patentanwälte PartG mbB
Friedenheimer Brücke 21
80639 München (DE)**

(54) **CHARGING DEVICE, CHARGING METHOD AND PROGRAM**

(57) The problem is to shorten the charging time of an assembled battery. A charger (2) is used in an electric tool (3). The charger (2) charges an assembled battery (5), including an all-solid-state battery, with electricity. The charger (2) includes a charging unit (21). The charging unit (21) charges the assembled battery (5) by constant current charging until a voltage value of the assembled battery (5) during charging reaches a predetermined voltage value which is larger than a voltage value of the assembled battery (5) in a fully charged state.

*FIG. 1*

EP 4 683 167 A1

## Description

## Technical Field

The present disclosure generally relates to a charger, a charging method, and a program, and more particularly relates to a charger, a charging method, and a program, all of which are applied to an assembled battery for use in an electric tool.

## Background Art

Patent Literature 1 discloses a charging circuit for charging a battery pack for use in an electric tool.

## Citation List

## Patent Literature

Patent Literature 1: JP 2011-45224 A

## Summary of Invention

A charging circuit (charger) as disclosed in Patent Literature 1 is required to shorten the charging time of the battery pack (assembled battery).

In view of the foregoing background, it is therefore an object of the present disclosure to provide a charger, a charging method, and a program, all of which contribute to shortening the charging time of an assembled battery.

A charger according to an aspect of the present disclosure is used in an electric tool. The charger charges an assembled battery, including an all-solid-state battery, with electricity. The charger includes a charging unit. The charging unit charges the assembled battery by constant current charging until a voltage value of the assembled battery during charging reaches a predetermined voltage value which is larger than a voltage value of the assembled battery in a fully charged state.

A charging method according to another aspect of the present disclosure is performed by one or more processors. The charging method is a method for charging an assembled battery used in an electric tool which includes an all-solid-state battery. The charging method includes charging the assembled battery by constant current charging until a voltage value of the assembled battery during charging reaches a predetermined voltage value which is larger than a voltage value of the assembled battery in a fully charged state.

A program according to still another aspect of the present disclosure is a program designed to cause one or more processors to perform the charging method described above.

## Brief Description of Drawings

[FIG. 1] FIG. 1 is a schematic diagram illustrating a configuration for a charging system according to an exemplary embodiment;
[FIG. 2] FIG. 2 is a schematic representation illustrating the appearance of the charging system;
[FIG. 3] FIG. 3 is a waveform chart showing how a charging method is performed by a charger included in the charging system; and
[FIG. 4] FIG. 4 is a flowchart showing the procedure of operation of the charger.

## Description of Embodiments

A preferred embodiment of the present disclosure will now be described in detail with reference to the accompanying drawings. In the following description of embodiments, constituent elements illustrated on multiple drawings and having the same function will be designated by the same reference sign and description thereof will be omitted herein to avoid redundancy. Note that the embodiment to be described below is only an exemplary one of various embodiments of the present disclosure and should not be construed as limiting. Rather, the exemplary embodiment may be readily modified in various manners depending on a design choice or any other factor without departing from the scope of the present disclosure. It should also be noted that the embodiments (including their variations) to be described below may be adopted in combination as appropriate.

Note that the drawings to be referred to in the following description of embodiments are all schematic representations. Thus, the ratio of the dimensions (including thicknesses) of respective constituent elements illustrated on the drawings does not always reflect their actual dimensional ratio.

(1) Overview

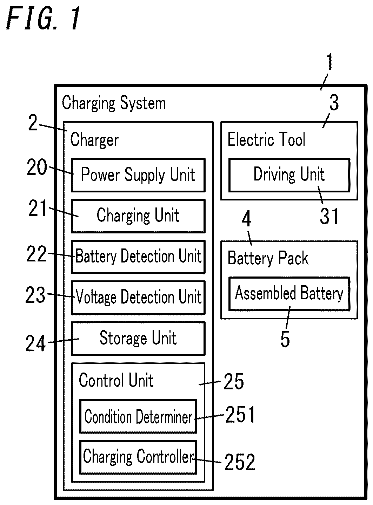

An overview of a charging system 1 according to an embodiment will be described with reference to FIG. 1.

A charger 2 according to this embodiment charges an assembled battery 5 with electricity. The assembled battery 5 is used in an electric tool 3 and includes an all-solid-state battery. More specifically, the assembled battery 5 according to this embodiment includes a plurality of battery cells. All of the plurality of battery cells included in the assembled battery 5 according to this embodiment are all-solid-state battery cells.

The charger 2 includes a charging unit 21. The charging unit 21 charges the assembled battery 5 by constant current charging until a voltage value of the assembled battery 5 during charging reaches a predetermined voltage value which is larger than a voltage value of the assembled battery 5 in a fully charged state.

As used herein, the "voltage value of the assembled battery 5" refers to a voltage value between terminals of the assembled battery 5 (or a battery pack 4), a voltage value between single battery cells, or a voltage value between a plurality of battery cells. In this embodiment, the voltage value of the assembled battery 5 is supposed to be, for example, a voltage value between terminals of the assembled battery 5 (or the battery pack 4). Also, the "voltage value of the assembled battery 5 during charging" herein refers to a voltage value of the assembled battery 5 while the charging unit 21 is charging the assembled battery 5 by constant current charging. Furthermore, the "fully charged state" herein refers to a state in which the state of charge (SOC) is, for example, 100%. Note that the "fully charged state" may also refer to a state in which the SOC is, for example, equal to or higher than 90%.

The assembled battery 5 using the all-solid-state battery cells may be charged with a larger current than an assembled battery using, for example, lithium-ion battery cells. Furthermore, the charger 2 according to this embodiment charges the assembled battery 5 by constant current charging until a voltage value of the assembled battery 5 during charging reaches a predetermined voltage value which is larger than a voltage value of the assembled battery 5 in a fully charged state, thus contributing to shortening the charging time of the assembled battery 5.

(2) Details

Next, a detailed configuration for the charging system 1 according to this embodiment will be described with reference to FIGS. 1-3.

(2.1) Configuration for charging system

The charging system 1 according to this embodiment is used, for example, on an assembly line in which a workpiece is assembled at a factory. As shown in FIG. 1, the charging system 1 includes a charger 2, an electric tool 3, and a battery pack 4. In the charging system 1 according to this embodiment, the charger 2 charges the battery pack 4 which may be removably attached to the electric tool 3. Note that the charging system 1 does not have to include the battery pack 4. Alternatively, the charging system 1 may also include the charger 2 and an electric tool 3 in which the assembled battery 5 is built. Still alternatively, the charging system 1 may also include the single charger 2, a plurality of electric tools 3, and a plurality of battery packs 4.

(2.2) Configuration for electric tool

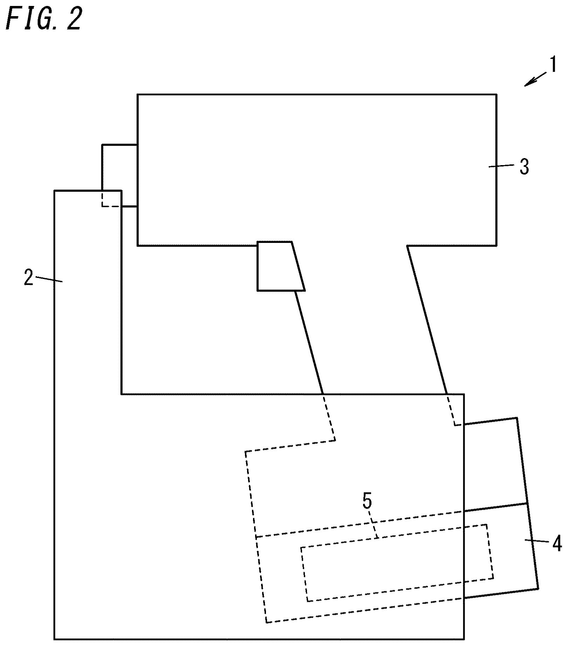

As shown in FIG. 2, the electric tool 3 according to this embodiment is an impact rotary tool such as an impact screwdriver. The electric tool 3 according to this embodiment is an electric tool that a user may grip with a single hand. Note that the electric tool 3 is not limited to the impact rotary tool but may also be any other type of electric tool such as a drill screwdriver or a hammer drill.

The electric tool 3 according to this embodiment is configured to be loaded with the removable battery pack 4. Note that the electric tool 3 does not have to be configured to be loaded with the removable battery pack 4. Alternatively, the electric tool 3 may also be configured to have a built-in battery pack 4 (or assembled battery 5).

As shown in FIG. 1, the electric tool 3 includes a driving unit 31. The electric tool 3 uses, as a power source, the assembled battery 5 of the battery pack 4 to activate the driving unit 31 with the electric power (i.e., electrical energy) supplied from the assembled battery 5.

The driving unit 31 includes a motor. The driving unit 31 is configured to operate using the electric power supplied to the motor from the assembled battery 5 serving as a power source. Also, the driving unit 31 includes an output shaft that rotates when the motor is energized. A screwdriver bit for use to turn a fastening member such as a screw is removably attached to the output shaft. When the user pulls the trigger of the electric tool 3 with the screwdriver bit fitted into a tool hole of a fastening member, the screwdriver bit starts rotating, thus allowing for either tightening or loosening the fastening member.

When the user finishes or suspends his or her operations, he or she may load the electric tool 3 into the charger 2 as shown in FIG. 2. Then, the assembled battery 5 of the battery pack 4 attached to the electric tool 3 may be charged with electricity by the charger 2. In the same way, even in a situation where the assembled battery 5 is built in the electric tool 3, the assembled battery 5 built in the electric tool 3 may also be charged with electricity by the charger 2 by making the user load the electric tool 3 into the charger 2 when he or she finishes or suspends his or her operations.

(2.3) Configuration for battery pack

As described above, the battery pack 4 according to this embodiment is configured to be removably attached to the electric tool 3. Alternatively, the battery pack 4 may also be configured to be irremovably attached (i.e., fixed) to the electric tool 3. As shown in FIG. 1, the battery pack 4 includes the assembled battery 5.

The assembled battery 5 according to this embodiment is housed, for example, in a housing of the battery pack 4. As described above, the assembled battery 5 according to this embodiment includes a plurality of all-solid-state battery cells. The plurality of all-solid-state battery cells according to this embodiment is implemented as a plurality of laminated battery cells (i.e., pouch cells) stacked in a predetermined direction.

The assembled battery 5 using the all-solid-state battery cells may be charged with a larger current than an assembled battery using, for example, lithium-ion battery cells. That is to say, if the all-solid-state battery and the lithium-ion battery have the same electric capacitance, the all-solid-state battery may be charged more quickly than the lithium-ion battery.

Also, the battery pack 4 includes power-receiving terminals to receive electric power supplied from the charger 2. The power-receiving terminals include at least one pair of terminals, namely, a high-potential terminal and a low-potential terminal. While the assembled battery 5 is being charged, a potential at the high-potential terminal is higher than a potential at the low-potential terminal. With the electric tool 3 loaded into the charger 2, the power-receiving terminals of the battery pack 4 and the power feeding terminals of the charger 2 are mechanically and electrically connected to each other. As used herein, the phrase "electrically connected to" refers to connection in an electrically conductive state, which includes not only direct connection but also indirect connection via a conductor such as an electric wire, a circuit breaker, or relay (i.e., a connecting device).

(2.4) Configuration for charger

The charger 2 is a device that may charge the assembled battery 5 with electricity. As shown in FIG. 2, the charger 2 according to this embodiment is configured to be loaded with the electric tool 3 in a fixed position. That is to say, when the user finishes or suspends his or her operations, he or she may load the electric tool 3 into the charger 2, thus having the electric tool 3 fixed to the charger 2. Note that the charger 2 does not have to be configured to be ready to fix the electric tool 3 thereon. Rather, the charger 2 only needs to be configured to be ready to fix the battery pack 4 thereon. Alternatively, the charger 2 may also be configured to be loaded with either a plurality of electric tools 3 or a plurality of battery packs 4.

The charger 2 includes the power feeding terminals to supply electric power to the assembled battery 5. The power feeding terminals include at least one pair of terminals, namely, a high-potential terminal and a low-potential terminal. While the assembled battery 5 is being charged, a potential at the high-potential terminal is higher than a potential at the low-potential terminal. As described above, with the electric tool 3 loaded into the charger 2, the power feeding terminals of the charger 2 and the power-receiving terminals of the battery pack 4 are mechanically and electrically connected to each other. More specifically, with the electric tool 3 loaded into the charger 2, the high-potential terminal of the power feeding terminals and the high-potential terminal of the power-receiving terminals are mechanically and electrically connected to each other, and the low-potential terminal of the power feeding terminals and the low-potential terminal of the power-receiving terminals are mechanically and electrically connected to each other.

As shown in FIG. 1, the charger 2 according to this embodiment includes a power supply unit 20, the charging unit 21, a battery detection unit 22, a voltage detection unit 23, a storage unit 24, and a control unit 25.

The power supply unit 20 is electrically connected to an external power supply. As used herein, the "external power supply" refers to a grid power supply, a distributed power supply such as a solar battery, and a mobile power supply such as a portable power supply. In this embodiment, the external power supply is supposed to be, for example, a grid power supply.

The power supply unit 20 converts the electric power supplied from the external power supply into electric power to be supplied to respective components of the charger 2 (namely, the charging unit 21, the battery detection unit 22, the voltage detection unit 23, the storage unit 24, and the control unit 25). The power supply unit 20 outputs the electric power thus converted to the respective components of the charger 2. More particularly, the power supply unit 20 converts alternating current power supplied from the grid power supply into direct current power to be supplied to the respective components of the charger 2 and outputs the direct current power thus converted to the respective components of the charger 2.

The battery detection unit 22 detects electrical connection or disconnection between the charging unit 21 and the assembled battery 5. In other words, the battery detection unit 22 according to this embodiment detects that the electric tool 3 is loaded into the charger 2. The battery detection unit 22 is, for example, a contact sensor provided for the power feeding terminals and detects mechanical connection between the power feeding terminals included in the charger 2 and the corresponding power-receiving terminals included in the battery pack 4.

The voltage detection unit 23 detects a voltage value of the assembled battery 5 included in the battery pack 4. With the electric tool 3 loaded into the charger 2, the voltage detection unit 23 according to this embodiment detects a voltage value of the assembled battery 5. The voltage detection unit 23 is, for example, electrically connected to the high-potential terminal and low-potential terminal of the power feeding terminals to detect a voltage value of the assembled battery 5 by detecting a potential difference between the high-potential terminal and the low-potential terminal.

The storage unit 24 may be a semiconductor memory such as a read-only memory (ROM), a random-access memory (RAM), or an electrically erasable programmable read-only memory (EEPROM). Alternatively, the storage unit 24 may also be a memory of the control unit 25. Still alternatively, the storage unit 24 may also be a storage medium such as a memory card to be loaded removably into the charger 2.

The storage unit 24 stores a piece of information about the voltage value of the assembled battery 5 as detected by the voltage detection unit 23. The storage unit 24 stores a piece of information about a charging condition determined by a condition determiner 251.

The control unit 25 may be implemented as, for example, a computer system including one or more processors (microprocessors) and one or more memories. The functions of the control unit 25 are performed by making the one or more processors execute one or more programs stored in the one or more memories. In this embodiment, the program is stored in advance in the memory of the control unit 25. Alternatively, the program may also be downloaded via a telecommunications line such as the Internet or distributed after having been stored in a non-transitory storage medium such as a memory card.

The control unit 25 controls the operation of the charger 2. That is to say, the control unit 25 controls the operations of the charging unit 21, the battery detection unit 22, the voltage detection unit 23, and the storage unit 24. As shown in FIG. 1, the control unit 25 includes the condition determiner 251 and a charging controller 252.

The condition determiner 251 determines the charging condition for charging control to be performed by the charging controller 252. Also, the condition determiner 251 outputs a control instruction to the charging controller 252. In addition, the condition determiner 251 has the storage unit 24 store information about the charging condition thus determined. The control instruction is an instruction to start or stop charging. If the control instruction is an instruction to start charging, the control instruction includes a charging condition. The charging condition includes a condition about a current value of the charging current.

The condition determiner 251 determines, based on the result of detection obtained by the battery detection unit 22, whether or not charging should be started. When the battery detection unit 22 detects that the electric tool 3 is loaded into the charger 2, the condition determiner 251 determines that the assembled battery 5 start to be charged.

The condition determiner 251 sets a current value of the charging current for the first charging session. As used herein, "the first charging session" refers to the constant current charging session performed for the first time out of constant current charging sessions performed multiple times since the electric tool 3 was loaded into the charger 2 and until charging is completed or the electric tool 3 is unloaded from the charger 2. The current value of the charging current for the first charging session may be a preset value or a current value to be set by the condition determiner 251 based on a voltage value of the assembled battery 5, whichever is appropriate. In this embodiment, the current value of the charging current for the first charging session is supposed to be a preset value.

The condition determiner 251 determines, based on the information about the voltage value detected by the voltage detection unit 23, whether or not charging should be suspended. In other words, the condition determiner 251 determines, based on the voltage value of the assembled battery 5 during charging, whether or not charging should be suspended. More specifically, the condition determiner 251 determines, depending on whether or not the voltage value of the assembled battery 5 during charging has reached a predetermined voltage value, whether or not charging should be suspended. When the voltage value of the assembled battery 5 during charging is equal to or larger than the predetermined voltage value, the condition determiner 251 determines that charging of the assembled battery 5 should be suspended and outputs, to the charging controller 252, an instruction (i.e., a control instruction) to suspend charging of the assembled battery 5.

After the voltage value of the assembled battery 5 during charging has reached the predetermined voltage value, the condition determiner 251 according to this embodiment causes the assembled battery 5 to be recharged at least once. As used herein, "recharging" refers to a constant current charging session performed, after the electric tool 3 has been loaded into the charger 2, on the assembled battery 5 for the second time and on. The condition determiner 251 sets a current value of the charging current for recharging at a value which is smaller than the current value of the charging current in the previous constant current charging session.

In this case, the voltage value of the assembled battery 5 increases from a first voltage value to the predetermined voltage value through the constant current charging session performed by the charging unit 21. When the constant current charging session by the charging unit 21 is completed, the voltage value of the assembled battery 5 falls, due to a voltage drop caused by the charging current and the internal resistance of the assembled battery 5 (or the battery pack 4), from the predetermined voltage value to a second voltage value. The second voltage value is larger than the first voltage value.

The condition determiner 251 sets a current value of charging current for recharging based on: the difference between the second voltage value when the previous constant current charging session was completed and the first voltage value at the first constant current charging session (i.e., the voltage value when the first constant current charging session was started); and the current value of the charging current for the previous constant current charging session. More specifically, the condition determiner 251 according to this embodiment sets the current value of the charging current for recharging by the following Equation (1).
[Mathematical Expression 1]

$$In + 1 = In - \alpha \times \Delta Vn \qquad \text{Equation (1).}$$

In Equation (1), $In + 1$ is a current value of the charging current for recharging (i.e., the $(n +1)^{th}$ constant current charging session); $In$ is the current value of the charging current for the previous (i.e., $n^{th}$) constant current charging session; $\alpha$ is a coefficient and is a function that will be a positive constant or a positive value; and $\Delta Vn$ is the difference between the second voltage value when the previous (i.e., $n^{th}$) constant current charging session was completed and the first voltage value at the first constant current charging session. That is to say, $\Delta Vn$ indicates

how much the voltage has increased, as a result of the n charging sessions, from the initial voltage of the assembled battery 5. In other words, $\Delta V_n$ indicates the magnitude of increase in voltage caused by the n charging sessions.

The condition determiner 251 determines, based on the information about the voltage value detected by the voltage detection unit 23, whether or not recharging should be suspended. In other words, the condition determiner 251 determines, based on the voltage value of the assembled battery 5 during recharging, whether or not recharging should be suspended. More specifically, the condition determiner 251 determines, depending on whether or not a voltage value of the assembled battery 5 during recharging has reached a predetermined voltage value, whether or not recharging should be suspended. When the voltage value of the assembled battery 5 during recharging is equal to or larger than the predetermined voltage value, the condition determiner 251 determines that recharging of the assembled battery 5 should be suspended and outputs, to the charging controller 252, an instruction (i.e., a control instruction) to suspend recharging of the assembled battery 5. In other words, the instruction to suspend recharging is an instruction to complete charging.

After the voltage value of the assembled battery 5 during charging has reached the predetermined voltage value, the condition determiner 251 causes the assembled battery 5 to be recharged repeatedly until a predetermined condition is satisfied. As used herein, the "predetermined condition" is that recharging should be completed when the current value of the charging current for the previous charging session changes from a current value larger than the predetermined current value into a current value equal to or smaller than the predetermined current value. That is to say, once recharging is completed, which means that a current value of the charging current during charging is equal to or smaller than the predetermined current value, the condition determiner 251 keeps the assembled battery 5 from being recharged.

The charging controller 252 controls the charging unit 21 in accordance with a control instruction output by the condition determiner 251.

With the electric tool 3 loaded into the charger 2, the charging unit 21 is electrically connected to the assembled battery 5 via, for example, the power feeding terminals included in the charger 2 and the corresponding power-receiving terminals included in the battery pack 4. The charging unit 21 is configured to be ready to charge the assembled battery 5 of the battery pack 4 with electricity. The charging unit 21 converts direct current power supplied from the power supply unit 20 into direct current power to be supplied to the assembled battery 5, and outputs the direct current power thus converted to the assembled battery 5. The charging unit 21 according to this embodiment performs, under the control of the charging controller 252, the constant current charging session on the assembled battery 5.

After the voltage value of the assembled battery 5 during charging has reached the predetermined voltage value, the charging unit 21 recharges the assembled battery 5 under the control of the charging controller 252. Under the control of the charging controller 252, the charging unit 21 recharges, at a current value smaller than the current value for the previous constant current charging session, the assembled battery 5 until the voltage value of the assembled battery 5 during charging reaches the predetermined voltage value.

The charger 2 according to this embodiment allows for reducing, by recharging the assembled battery 5 with the current value decreased, the magnitude of voltage drop when charging is completed, thus making the voltage value when the charging session is completed closer to a target voltage value (i.e., a voltage value in a fully charged state). That is to say, the charger 2 according to this embodiment allows for controlling charging of the assembled battery 5 by such a simple control method.

Under the control of the charging controller 252, the charging unit 21 recharges the assembled battery 5 at a current value based on: the difference between the second voltage value when the previous constant current charging session was completed and the first voltage value at the first constant current charging session; and the current value for the previous constant current charging session.

The charger 2 according to this embodiment allows for recharging the assembled battery 5 at an appropriate current value because recharging is performed at a current value based on the magnitude of increase in voltage and the current value during the previous charging session.

After the voltage value of the assembled battery 5 during charging has reached the predetermined voltage value, the charging unit 21 recharges, under the control of the charging controller 252, the assembled battery 5 repeatedly until a predetermined condition is satisfied.

The charger 2 according to this embodiment may bring a voltage value when charging is completed closer to the target voltage value (i.e., a voltage value in a fully charged state) by recharging the assembled battery 5 repeatedly with the current value decreased until the predetermined condition is satisfied. That is to say, the charger 2 according to this embodiment allows for controlling charging of the assembled battery 5 by such a simple control method.

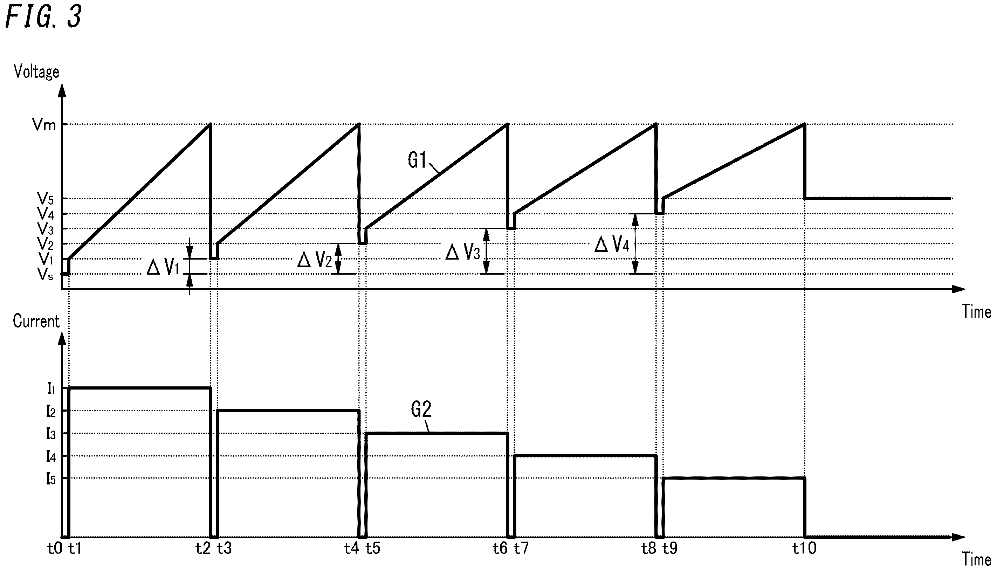

FIG. 3 shows how the voltage value of the assembled battery 5 and the current value of the charging current change since the electric tool 3 was loaded into the charger 2 and until the assembled battery 5 is fully charged. In FIG. 3, the graph G1 is a voltage waveform showing how the voltage value of the assembled battery 5 changes. The graph G2 is a current waveform showing how the current value of the charging current changes. In the example shown in FIG. 3, the initial voltage value of the assembled battery 5 is Vs, the predetermined voltage value is Vm, the voltage value of the assembled battery 5 in the fully charged state is V5, and the predetermined current value is I5.

Suppose that the electric tool 3 is loaded into the charger 2 at a time t0. The battery detection unit 22 detects that the electric tool 3 is loaded into the charger 2 at substantially the same timing as the time t0. The charging unit 21 starts, at a time t1, charging the assembled battery 5 based on the result of detection by the battery detection unit 22. In the example shown in FIG. 3, the initial voltage value of the assembled battery 5 is Vs. That is to say, the first voltage value for the first charging session is Vs. The charging unit 21 performs the first constant current charging session during a period between the time t1 and a time t2 at which the voltage value of the assembled battery 5 reaches the predetermined voltage value. When the first constant current charging session is completed, i.e., at a timing immediately after the time t2, the voltage value of the assembled battery 5 falls from Vm to V1. In the example shown in FIG. 3, the current value for the first constant current charging session is I1, and the second voltage for the first constant current charging session is V1. The value of V1 is larger than the value of Vs.

The current value I1 for the first constant current charging session is larger than the predetermined current value I5. Thus, the charging unit 21 recharges the assembled battery 5. The charging unit 21 performs the second constant current charging session during a period between a time t3 and a time t4 at which the voltage value of the assembled battery 5 reaches the predetermined voltage value. When the second constant current charging session is completed, i.e., at a timing immediately after the time t4, the voltage value of the assembled battery 5 falls from Vm to V2. In the example shown in FIG. 3, the current value for the second constant current charging session is I2, the first voltage is V1, and the second voltage is V2. I2 is a value based on I1 and ∆V1 (i.e., V1 - Vs) and a value smaller than the value of I1. The value of V2 is larger than the value of V1.

The current value I2 for the second constant current charging session is larger than the predetermined current value I5. Thus, the charging unit 21 recharges the assembled battery 5. The charging unit 21 performs the third constant current charging session during a period between a time t5 and a time t6 at which the voltage value of the assembled battery 5 reaches the predetermined voltage value. When the third constant current charging session is completed, i.e., at a timing immediately after the time t6, the voltage value of the assembled battery 5 falls from Vm to V3. In the example shown in FIG. 3, the current value for the third constant current charging session is I3, the first voltage is V2, and the second voltage is V3. I3 is a value based on I2 and ∆V2 (i.e., V2 - Vs) and a value smaller than the value of I2. The value of V3 is larger than the value of V2.

The current value I3 for the third constant current charging session is larger than the predetermined current value I5. Thus, the charging unit 21 recharges the assembled battery 5. The charging unit 21 performs the fourth constant current charging session during a period between a time t7 and a time t8 at which the voltage value of the assembled battery 5 reaches the predetermined voltage value. When the fourth constant current charging session is completed, i.e., at a timing immediately after the time t8, the voltage value of the assembled battery 5 falls from Vm to V4. In the example shown in FIG. 3, the current value for the fourth constant current charging session is I4, the first voltage is V3, and the second voltage is V4. I4 is a value based on I3 and ∆V3 (i.e., V3 - Vs) and a value smaller than the value of I3. The value of V4 is larger than the value of V3.

The current value I4 for the fourth constant current charging session is larger than the predetermined current value I5. Thus, the charging unit 21 recharges the assembled battery 5. The charging unit 21 performs the fifth constant current charging session during a period between a time t9 and a time t10 at which the voltage value of the assembled battery 5 reaches the predetermined voltage value. When the fifth constant current charging session is completed, i.e., at a timing immediately after the time t10, the voltage value of the assembled battery 5 falls from Vm to V5. In the example shown in FIG. 3, the current value for the fifth constant current charging session is I5, the first voltage is V4, and the second voltage is V5. I5 is a value based on I4 and ∆V4 (i.e., V4 - Vs) and a value smaller than the value of I4. The value of V5 is larger than the value of V4.

The current value I5 for the fifth constant current charging session is equal to the predetermined current value I5. Thus, the charging unit 21 completes the charging session of the assembled battery 5. Note that V5 as the voltage value of assembled battery 5 when the fifth charging session is completed is the voltage value of the assembled battery 5 in a fully charged state.

(3) Operation of charging system

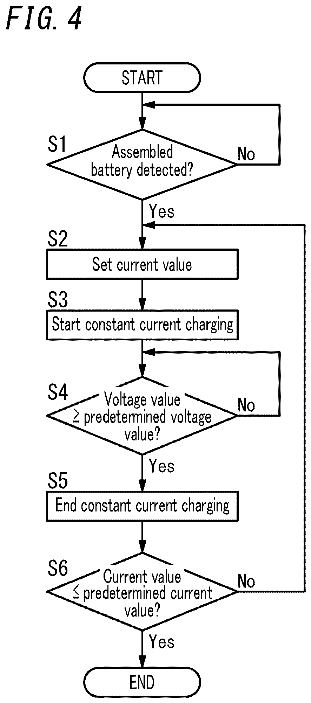

Next, an exemplary operation of the charger 2 included in the charging system 1 will be described with reference to FIG. 4. FIG. 4 is a flowchart showing an exemplary charging method to be performed by the charger 2.

First, the charger 2 determines whether or not the assembled battery 5 has been detected. That is to say, the charger 2 determines whether or not the electric tool 3 (or the battery pack 4) has been loaded into the charger 2 (in S1). If the charger 2 determines that no electric tool 3 have been loaded into the charger 2 (if the answer is NO in Step S1), the charger 2 repeats the processing step S1. If the charger 2 determines that the electric tool 3 have been loaded into the charger 2 (if the answer is YES in Step S1), the charger 2 sets a current value for the charging current (in S2). Then, the charger 2 starts a constant current charging session (in S3).

Next, the charger 2 determines whether or not the voltage value of the assembled battery 5 has changed into a voltage value equal to or larger than a predetermined voltage value (in S4). If the charger 2 determines that the voltage value of the assembled battery 5 be smaller than the predetermined voltage value (if the answer is NO in Step S4), the charger 2 repeats the processing step S4. On the other hand, if the charger 2 determines that the voltage value of the assembled battery 5 be equal to or larger than the predetermined voltage value (if the answer is YES in Step S4), the charger 2 ends the constant current charging session (in S5).

Next, the charger 2 determines whether or not the current value set in Step S2 is equal to or smaller than the predetermined current value (in S6). If the charger 2 determines that the current value set in Step S2 be larger than the predetermined current value (if the answer is NO in Step S6), the charger 2 performs the series of processing steps S2-S6 all over again. On the other hand, if the charger 2 determines that the current value set in Step S2 be equal to or smaller than the predetermined current value (if the answer is YES in Step S6), the charger 2 ends the charging session of the assembled battery 5.

Note that the flowchart shown in FIG. 4 shows only an exemplary procedure and should not be construed as limiting. Optionally, the processing steps shown in FIG. 4 may be performed in a different order from the illustrated one, some of the processing steps shown in FIG. 4 may be omitted as appropriate, and/or an additional processing step may be performed as needed.

(4) Variations

Next, variations of the exemplary embodiment will be enumerated one after another.

The function of the charging system 1 (or the charger 2) according to the first embodiment may also be implemented as, for example, a charging method, a (computer) program, or a non-transitory storage medium storing a program thereon. A charging method according to an aspect is performed by one or more processors. The charging method is a method for charging an assembled battery 5 used in an electric tool 3 which includes all-solid-state battery cells. The charging method includes charging the assembled battery 5 by constant current charging until a voltage value of the assembled battery 5 during charging reaches a predetermined voltage value which is larger than a voltage value of the assembled battery 5 in a fully charged state. A program according to another aspect is designed to cause one or more processors to perform the charging method just described above.

The charging system 1 (or charger 2) according to the present disclosure or the agent that performs the charging method according to the present disclosure includes a computer system. The computer system includes a processor and a memory as principal hardware components thereof. The computer system performs the functions of the charging system 1 according to the present disclosure or serves as the agent that performs the charging method according to the present disclosure by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

In the embodiment described above, the plurality of functions of the charging system 1 are integrated together in a single housing. However, this is not an essential configuration for the charging system 1. Alternatively, those constituent elements of the charging system 1 may be distributed in multiple different housings. Still alternatively, at least some functions of the charging system 1 (e.g., some functions of the charger 2) may be implemented as a cloud computing system as well.

In the embodiment described above, a situation where the condition determiner 251 sets a current value of a charging current for a recharging session by Equation (1) has been described as an example. However, this should not be construed as limiting. Alternatively, the current value of the charging current for the recharging session may also be a value that has been set in advance according to the number of times of recharging sessions.

If the assembled battery 5 is built in the electric tool 3, the electric tool 3 includes power-receiving terminals which are mechanically and electrically connected to their corresponding power feeding terminals of the charger 2.

In the embodiment described above, a situation where the assembled battery 5 includes a plurality of battery cells has been described as an example. However, this should not be construed as limiting. Alternatively, the assembled battery 5 may include only one battery cell. That is to say, the assembled battery 5 may also be configured to include only one all-solid-state battery cell as its battery cell.

In the embodiment described above, a situation where the all-solid-state battery cells are implemented as laminated battery cells (i.e., pouch cells) has been described as an example. However, this should not be construed as limiting. Alternatively, the all-solid-state battery cells may also be implemented as cylindrical battery cells (including button cells) or prismatic cells.

(Recapitulation)

As can be seen from the foregoing description of embodiments, a charger (2) according to a first aspect is used in an electric tool (3). The charger (2) charges an assembled battery (5), including an all-solid-state battery, with electricity. The charger (2) includes a charging unit (21). The charging unit (21) charges the assembled battery (5) by constant current charging until a voltage value of the assembled battery (5) during charging reaches a predetermined voltage value which is larger than a voltage value of the assembled battery (5) in a fully charged state.

This aspect contributes to shortening the charging time of an assembled battery (5) by charging the assembled battery (5) by constant current charging until a voltage value during charging reaches a predetermined voltage value which is larger than a voltage value in a fully charged state while the assembled battery (5), including an all-solid-state battery which may be charged with a larger current than a lithium-ion battery, is being charged.

In a charger (2) according to a second aspect, which may be implemented in conjunction with the first aspect, the charging unit (21) recharges the assembled battery (5) after the voltage value of the assembled battery (5) during charging has reached the predetermined voltage value. The charging unit (21) performs a constant current charging session to recharge the assembled battery (5) at a current value smaller than a current value for a previous constant current charging session until the voltage value of the assembled battery (5) during charging reaches the predetermined voltage value.

This aspect allows for controlling charging of the assembled battery (5) by a simple control method.

In a charger (2) according to a third aspect, which may be implemented in conjunction with the second aspect, the voltage value of the assembled battery (5) increases from a first voltage value to the predetermined voltage value through the constant current charging session performed by the charging unit (21). The voltage value of the assembled battery (5) falls from the predetermined voltage value to a second voltage value when the constant current charging session by the charging unit (21) is completed. The second voltage value is larger than the first voltage value. The charging unit (21) recharges the assembled battery (5) at a current value based on: difference between the second voltage value when the previous constant current charging session was completed and the first voltage value at the first constant current charging session; and a current value of the previous constant current charging session.

This aspect allows for recharging the assembled battery (5) at an appropriate current value because recharging is performed at a current value based on the magnitude of increase in voltage and a current value during the previous charging session.

In a charger (2) according to a fourth aspect, which may be implemented in conjunction with the second or third aspect, the charging unit (21) recharges the assembled battery (5) repeatedly after the voltage value of the assembled battery (5) during charging has reached the predetermined voltage value and until a predetermined condition is satisfied. The predetermined condition includes a condition that recharging be completed when a current value for the constant current charging session changes from a current value larger than a predetermined current value into a current value equal to or smaller than the predetermined current value.

This aspect allows for controlling charging of the assembled battery (5) by a simple control method.

Note that the constituent elements according to the second to fourth aspects are not essential constituent elements for the charger (2) but may be omitted as appropriate.

A charging method according to a fifth aspect is performed by one or more processors. The charging method is a method for charging an assembled battery (5) used in an electric tool (3) which includes an all-solid-state battery. The charging method includes charging the assembled battery (5) by constant current charging until a voltage value of the assembled battery (5) during charging reaches a predetermined voltage value which is larger than a voltage value of the assembled battery (5) in a fully charged state.

This aspect contributes to shortening the charging time of an assembled battery (5) by charging the assembled battery (5) by constant current charging until a voltage value during charging reaches a predetermined voltage value which is larger than a voltage value in a fully charged state while the assembled battery (5), including an all-solid-state battery which may be charged with a larger current than a lithium-ion battery, is being charged.

A program according to a sixth aspect is designed to cause one or more processors to perform the charging method according to the fifth aspect.

This aspect contributes to shortening the charging time of an assembled battery (5) by charging the assembled battery (5) by constant current charging until a voltage value during charging reaches a predetermined voltage value which is larger than a voltage value in a fully charged state while the assembled battery (5), including an all-solid-state battery which may be charged with a larger current than a lithium-ion battery, is being charged.

**Reference Signs List**

2    Charger
21    Charging Unit
3    Electric Tool
5    Assembled Battery

**Claims**

1. A charger configured to charge an assembled battery with electricity, the assembled battery being used in an electric tool and including an all-solid-state battery, the charger comprising a charging unit configured to charge the assembled battery by constant current charging until a voltage value of the assembled battery during charging reaches a predetermined voltage value which is larger than a voltage value of the assembled battery in a fully charged state.

2. The charger of claim 1, wherein the charging unit is configured to:

   recharge the assembled battery after the voltage value of the assembled battery during charging has reached the predetermined voltage value; and
   perform a constant current charging session to recharge the assembled battery at a current value smaller than a current value for a previous constant current charging session until the voltage value of the assembled battery during charging reaches the predetermined voltage value.

3. The charger of claim 2, wherein

   the voltage value of the assembled battery increases from a first voltage value to the predetermined voltage value through the constant current charging session performed by the charging unit and falls from the predetermined voltage value to a second voltage value when the constant current charging session by the charging unit is completed,
   the second voltage value is larger than the first voltage value, and
   the charging unit is configured to recharge the assembled battery at a current value based on:

difference between the second voltage value when the previous constant current charging session was completed and the first voltage value at the first constant current charging session; and a current value of the previous constant current charging session.

4. The charger of claim 2 or 3, wherein

   the charging unit is configured to recharge the assembled battery repeatedly after the voltage value of the assembled battery during charging has reached the predetermined voltage value and until a predetermined condition is satisfied, and
   the predetermined condition includes a condition that recharging be completed when a current value for the constant current charging session changes from a current value larger than a predetermined current value into a current value equal to or smaller than the predetermined current value.

5. A charging method performed by one or more processors to charge an assembled battery used in an electric tool which includes an all-solid-state battery, the charging method including charging the assembled battery by constant current charging until a voltage value of the assembled battery during charging reaches a predetermined voltage value which is larger than a voltage value of the assembled battery in a fully charged state.

6. A program designed to cause one or more processors to perform the charging method of claim 5.

*FIG. 1*

1

Charging System

3

2 — Charger

Electric Tool

20 — Power Supply Unit

Driving Unit

21 — Charging Unit

4    31

22 — Battery Detection Unit

Battery Pack

23 — Voltage Detection Unit

Assembled Battery

24 — Storage Unit

5

Control Unit — 25

Condition Determiner — 251

Charging Controller — 252

FIG. 2

FIG. 3

EP 4 683 167 A1

*FIG. 4*

```
              ┌─────────────┐
              │    START    │
              └──────┬──────┘
                     │    ◄──────────────────┐
                     ▼                        │
         S1      ╱ Assembled ╲      No        │
              ◄─╱ battery detected? ╲────────►┘
                 ╲               ╱
                     │
                    Yes
                     │      ◄──────────────────┐
         S2          ▼                          │
              ┌─────────────────┐               │
              │ Set current value│              │
              └────────┬────────┘               │
         S3            ▼                         │
              ┌──────────────────────┐          │
              │Start constant current charging│  │
              └────────┬─────────────┘          │
                       │      ◄─────────────┐    │
         S4            ▼                     │    │
                  ╱ Voltage value ╲   No     │    │
              ◄──╱ ≥ predetermined voltage ╲──────┘    │
                 ╲     value?     ╱        │
                       │                   │
                      Yes                  │
         S5            ▼                    │
              ┌────────────────────────┐   │
              │End constant current charging│ │
              └────────┬───────────────┘   │
                       ▼                    │
         S6        ╱ Current value ╲  No    │
              ◄───╱ ≤ predetermined current ╲────┘
                  ╲     value?     ╱
                       │
                      Yes
                       ▼
              ┌─────────────┐
              │     END     │
              └─────────────┘
```

## INTERNATIONAL SEARCH REPORT

| International application No. |
| --- |
| **PCT/JP2024/007945** |

**A. CLASSIFICATION OF SUBJECT MATTER**

*H02J 7/10*(2006.01)i
FI:    H02J7/10 B; H02J7/10 H

According to International Patent Classification (IPC) or to both national classification and IPC

**B. FIELDS SEARCHED**

Minimum documentation searched (classification system followed by classification symbols)

H02J7/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2021-164302 A (PANASONIC IP MANAGEMENT CORP.) 11 October 2021 (2021-10-11)<br>entire text, all drawings | 1-6 |
| A | JP 2013-62905 A (PANASONIC ECO SOLUTIONS POWER TOOLS CO., LTD.) 04 April 2013 (2013-04-04)<br>entire text, all drawings | 1-6 |
| A | JP 2005-151683 A (MATSUSHITA ELECTRIC INDUSTRIAL CO., LTD.) 09 June 2005 (2005-06-09)<br>entire text, all drawings | 1-6 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **25 April 2024** | **14 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/007945**

| Patent document cited in search report | | | Publication date (day/month/year) | Patent family member(s) | | | Publication date (day/month/year) |
|---|---|---|---|---|---|---|---|
| JP | 2021-164302 | A | 11 October 2021 | US | 2021/0305820 | A1 | |
| | | | | entire text, all drawings | | | |
| | | | | EP | 3890149 | A1 | |
| | | | | CN | 113472025 | A | |
| JP | 2013-62905 | A | 04 April 2013 | US | 2013/0063079 | A1 | |
| | | | | entire text, all drawings | | | |
| | | | | EP | 2568569 | A2 | |
| | | | | CN | 103001299 | A | |
| JP | 2005-151683 | A | 09 June 2005 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011045224 A